# EUROPÄISCHE PATENTSCHRIFT

(11) **EP 2 132 458 B1**
(45) Veröffentlichungstag und Bekanntmachung des Hinweises auf die Patenterteilung: **16.11.2011**
(21) Anmeldenummer: 08716012.3
(22) Anmeldetag: 25.02.2008
(51) Int. Cl.: F16H 25/06, F16H 49/00

(54) **KOAXIALGETRIEBE, INSBESONDERE HOHLWELLENGETRIEBE FÜR DIE INDUSTRIELLE ANTRIEBSTECHNIK**
COAXIAL TRANSMISSION, ESPECIALLY HOLLOW SHAFT TRANSMISSION FOR INDUSTRIAL DRIVE ENGINEERING
TRANSMISSION COAXIALE, EN PARTICULIER TRANSMISSION A ARBRE CREUX, DESTINEE À L'ENTRAINEMENT INDUSTRIEL

(30) Priorität: 02.04.2007 DE 102007016182; 24.04.2007 DE 102007019607
(43) Veröffentlichungstag der Anmeldung: 16.12.2009
(73) Patentinhaber: Wittenstein AG, 97999 Igersheim (DE)
(72) Erfinder: SCHMIDT, Michael, 97232 Giebelstadt (DE); WILHELM, Thomas, 97993 Creglingen (DE); BAYER, Thomas, 97999 Igersheim (DE)
(74) Vertreter: Weiss, Peter
(86) Internationale Anmeldenummer: PCT/EP2008/001467
(87) Internationale Veröffentlichungsnummer: WO 2008/119418

(56) Entgegenhaltungen:
- WO-A-84/00589
- WO-A-99/36711
- DE-A- 312 164
- GB-A- 153 982
- US-A- 2 966 808
- US-A- 4 099 427
- US-A- 4 798 104
- US-A1- 2003 047 025
- US-A1- 2005 280 303

## Beschreibung

Die vorliegende Erfindung betrifft ein Koaxialgetriebe nach dem Oberbegriff des Patentanspruchs 1.

Im wesentlichen werden drei unterschiedliche Technologien von Getrieben auf dem Markt verwendet, Zum Einen sind im Markt Planetengetriebe bekannt, bei welchen bspw. innerhalb eines Hohlrades koaxial ein oder mehrere Planetenräder mittels eines meist zentral angeordneten Sonnenrades zur Übertragung eines Momentes auf einen Planetenradträger bzw. ein Abtriebselement vorgesehen sind.

Bei derartigen Umlauf- oder Planetengetrieben können keine hohen Übertragungsgeschwindigkeiten gefahren sowie keine hohen Momente bei generell nur sehr kleinen möglichen Hohlwellendurchmessern übertragen werden, Zudem unterliegen derartige Getriebe einer geringen Steifigkeit und geringen Robustheit und besitzen eine geringe Überlastfähigkeit.

Ferner ist nachteilig, dass insbesondere bei hohen antriebsseitigen Drehzahlen eine Übersetzung bzw. ein Obersetzungsverhältnis beschränkt ist.

Ferner sind Exzentergetriebe bekannt, bei welchen meist ein Planetenrad innerhalb eines innen verzahnten Hohlrades zur Übertragung der Drehmomente wie zur Herstellung von Übersetzungen vorgesehen ist.

Bei Exzentergetrieben ist von Nachteil, dass diese grosse Trennkräfte und sehr grosse Lagerelemente, insbesondere bei Hohlwellenausführungen, erfordern und nur für Hohlwellenausführungen mit kleinerem Durchmesser geeignet sind. Auch hier weisen diese Exzentergetriebe geringe Überlastfähigkeiten und geringe Robustheiten auf.

Zudem sind die Übersetzungsbereiche beschränkt auf etwa i≃30 bis i=100 und dies nur bei geringen Antriebsdrehzahlen. Bei höheren Antriebsdrehzahlen unterliegen derartige Exzentergetriebe einem hohen Verschleiss und weisen daher eine geringe Standzeit auf, was unerwünscht ist.

Zudem weisen derartige Exzentergetriebe hohe Reibungsverluste und daher geringe Wirkungsgrade auf, wenn Kupplungen od. dgl. an Exzentergetriebe anschliessen, um die exzentrische Abtriebsbewegung auf eine zentrische Bewegung zu verlagern. Daher ist der Wirkungsgrad des Exzentergetriebes sehr niedrig.

Insbesondere bei hohen Drehzahlen treten hohe Schwingungsproblematiken auf, die ebenfalls unerwünscht sind.

Ferner sind Harmonic Drive Getriebe bekannt, die zwar auch als Hohlwellengetriebe ausführbar sind, wobei zwischen einem meist oval ausgebildeten Antriebselement und einem innen verzahnten Hohlrad ein sogenannter Flexspline angeordnet ist, der weich und nachgiebig ausgebildet ist und das entsprechende Moment zwischen Antrieb und Hohlrad überträgt sowie eine Übersetzung zulässt.

Der sogenannte Flexspline unterliegt dauerhaften Belastungen und versagt häufig bei hohen Momenten. Zudem ist der Flexspline nicht überlastfähig und reisst häufig bei zu hohen Momenten schnell ab. Das Harmonic Drive Getriebe hat ferner einen schlechten Wirkungsgrad und eine geringe Verdrehsteifigkeit.

Die DE 31 21 64 A stellt den nächstliegenden Stand der Technik zur vorliegenden Erfindung dar. Sie betrifft ein selbstsperrendes Schaltgetriebe, bei dem mehrere, sternförmig um eine Antriebswelle angeordnete Arme, mit ihren inneren Enden exzentrisch auf der Antriebswelle gelagert sind. Die Arme sind als zweiarmige Hebel ausgebildet, ihre Drehpunkte sind kreuzkopfartig geführt und ihre inneren Enden ruhen unabhängig voneinander auf dem antreibenden Exzenter, so dass die äusseren Zahnförmigen Enden ein Pleuelbewegung ausführen. Dabei greifen sie aufeinander folgend in ein Zahnrad ein und treiben dieses entgegengesetzt zur Drehung der Antriebswelle an. Die Auflageflächen sind gegenüber den Armen verbreitert. Allerdings sind diese fest und nicht lose oder gelenkartig mit dem Zahnförmigen Arm verbunden.

Der vorliegenden Erfindung liegt daher die Aufgabe zugrunde, ein Koaxialgetriebe der eingangs genannten Art zu schaffen, welches die genannten Nachteile der bis jetzt bekannten Koaxialgetriebe, Planetengetriebe, Exzentergetriebe sowie Harmonic Drive Getriebe beseitigt, wobei eine Kraftübertragung zwischen Antriebselement und Zahnsegment deutlich zum Übertragen von sehr hohen Kräften verbessert werden soll.

Zudem soll das Koaxialgetriebe eine sehr hohe Kompaktheit und Komplexität bei geringstmöglichem Einbauraum und Gewicht bei einer gewissen Leistungsgrösse aufweisen.

Zur Lösung dieser Aufgabe führt der kennzeichnende Teil des Patentanspruchs 1.

Bei der vorliegenden Erfindung hat es sich als vorteilhaft erwiesen, ein Koaxialgetriebe zu schaffen, bei welchem eine Mehrzahl von Zahnsegmenten innerhalb eines Elementes linear radial nach aussen geführt sind.

Die einzelnen Zahnsegmente weisen einends entsprechende Zahnflanken auf, die in entsprechende Zahnlücken eines äusseren Hohlrades eingreifen.

Die Zahnsegmente werden mittels eines Antriebselementes, welches eine äussere Profilierung und eine äussere Kontur besitzt, zur Herstellung einer rotativen übersetzten Bewegung durch eine entsprechende rotative Antriebsbewegung in die Verzahnung des Hohlrades bewegt.

Dabei hat sich als besonders vorteilhaft bei der vorliegenden Erfindung erwiesen, im Fussbereich der zahnsegmente vergrösserte Auflageelemente zu bilden, um sehr hohe radial wirkende Kräfte des Antriebselementes, insbesondere von dessen Profilierung, auf das Zahnsegment zu übertragen.

Dabei können die Auflageelemente gelenkartig direkt oder indirekt, über Zwischenelemente, Zwischenlager, Gelenke oder direkt einstückig über entsprechende Einschnürungen, Engstellen od. dgl., mit dem Zahnsegment in Verbindung stehen.

Durch eine grössere Länge der Auflageelemente im Verhältnis zur Dicke des Zahnsegmentes wird die Kontaktfläche der Auflageelemente deutlich vergrössert, so dass dort in diesem Bereich eine Mehrzahl von Lagerelementen die Kräfte des Antriebselementes auf das Zahnsegment übertragen. Es erfolgt eine grosse Lastverteilung und somit können auch sehr hohe Drehzahlen des Koaxialgetriebes bei hoher Momentübertragung gewährleistet werden.

Ferner hat sich als besonders vorteilhaft erwiesen, dass die einzelnen zueinander benachbarten Auflageelemente stirnseitig ineinandergreifen und in Umfangsrichtung sowie in radialer Richtung ein gewisses Spiel zulassen.

Ein axiales Spiel jedoch wird durch entsprechendes Eingreifen von stirnseitigen Vorsprüngen in entsprechende benachbarte Ausnehmungen der benachbarten Auflageelemente gewährleistet.

Die Lagerelemente sind vorzugsweise Nadelrollen oder Kugeln, die vollbestückt oder einzeln beabstandet in Käfigen bzw. Abstandhalter zwangsgeführt eingesetzt sein können.

Dabei soll auch im Rahmen der vorliegenden Erfindung liegen, dass bspw. über einen zusätzlichen, elastischen Lageraussenring zwischen einer Unterseite des Auflageelementes und den Lagerelementen eine zusätzliche Verteilung der Kräfte ermöglicht wird.

Insgesamt ist mit der vorliegenden Erfindung ein Koaxialgetriebe geschaffen, bei welchem äusserst hohe Kräfte bei sehr hohen Geschwindigkeiten ausgehend vom Antriebselement auf die radiale Bewegung der Zahnsegmente und somit auf die Verzahnung des Hohlrades übertragen werden können.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a einen schematisch dargestellten Querschnitt durch ein Koaxialgetriebe;
Figur 1b eine perspektivische Draufsicht auf einen Teil des Koaxialgetriebes im Bereich von Antriebselement und Zahnsegmenten;
Figur 1c einen vergrössert dargestellten Teilquerschnitt des Koaxialgetriebes gemäss Figur 1a;
Figur 2 eine schematisch dargestellte perspektivische Darstellung auf ein weiteres Ausführungsbeispiel eines Koaxialgetriebes im Bereich von Zahnsegmenten und Antriebselement;
Figuren 3a bis 3c querschnittlich vergrösserte Darstellungen einzelner Zahnsegmente mit unterschiedlichen, direkt oder indirekt verbundenen und anschliessenden Auflageelementen zum Abstützen auf Lageraussenringen oder Nadellagern;
Figur 4 eine schematisch dargestellte perspektivische Darstellung auf ein Teil eines weiteren Ausführungsbeispieles eines Koaxialgetriebes mit Zahnsegmenten und Auflageelementen;
Figur 5 eine perspektivische Unteransicht auf ein Ausführungsbeispiel eines Auflageelements zur Übertragung der Schubbewegung der Zahnsegmente.

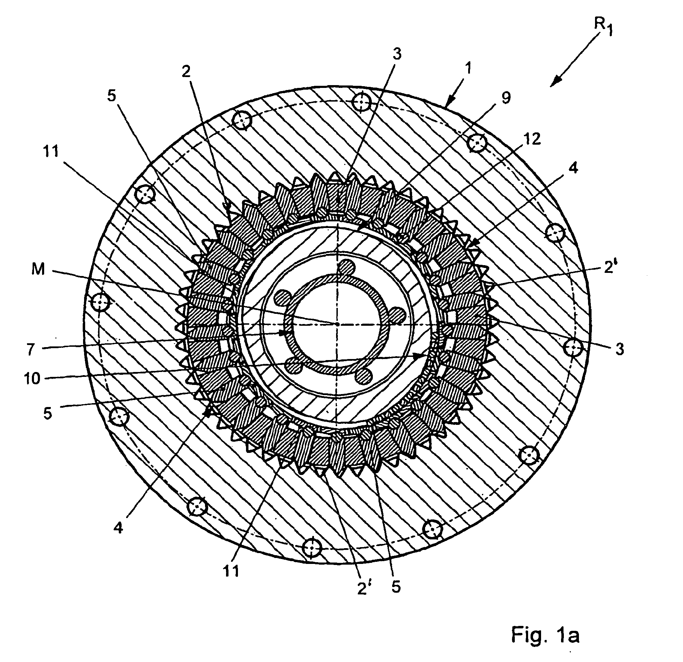

Gemäss Figur 1a weist ein Koaxialgetriebe R₁ ein Hohlrad 1 auf, welches eine innenliegende Verzahnung 2 mit einer Mehrzahl von Zahnlücken 2' besitzt. Innerhalb des Hohlrades 1 ist ein Element 3 kreisringartig eingesetzt, wobei im kreisringartigen Element 3 eine Mehrzahl von Zahnsegmenten 5 radial nebeneinander und in entsprechende Führungen 4 eingesetzt sind. Die Zahnsegmente 5 sind innerhalb der Führungen 4 radial hin und her verschiebbar gelagert und weisen eine Zahnflanke 6 auf.

Innerhalb des Elementes 3 mit aufgenommenen Zahnsegmenten 5 ist ein Antriebselemente 7, ausgebildet als Welle oder als Hohlwelle, vorgesehen, das eine äussere Profilierung 8 aufweist, die bspw. mit einer Kontur 9, als Erhöhung, polygon- oder nockenartig ausgebildet sein kann.

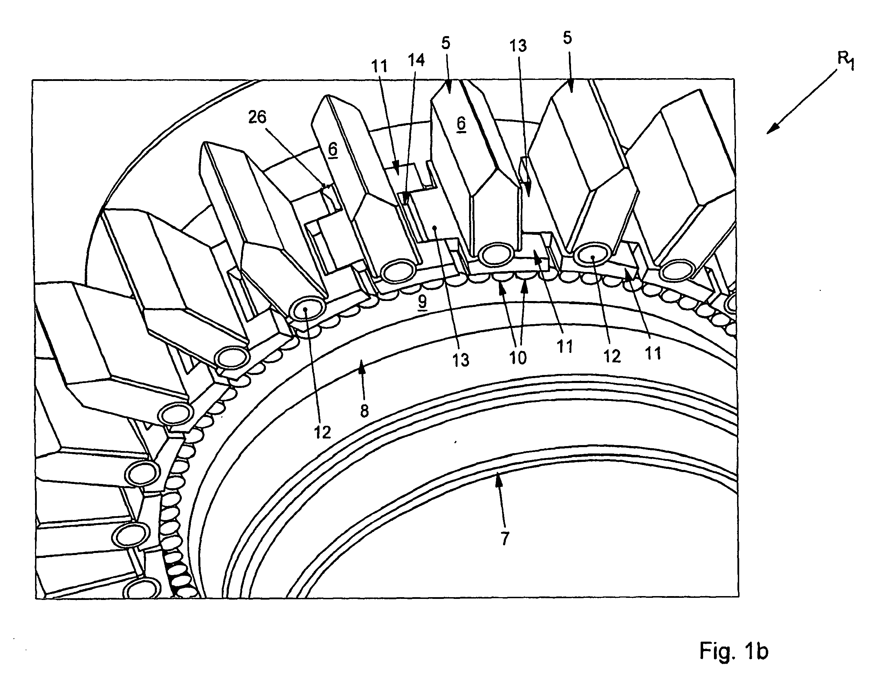

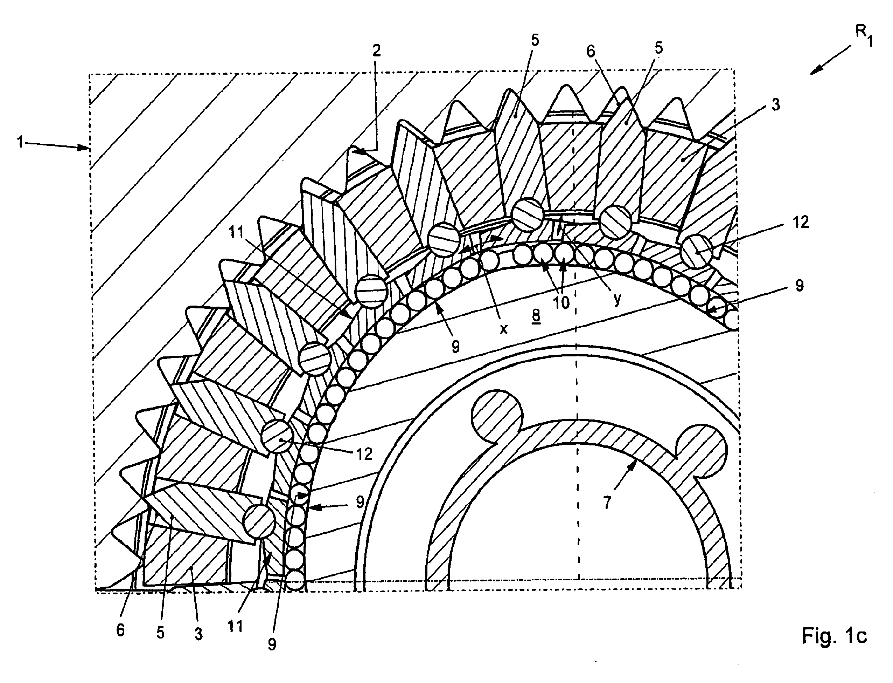

Ebenfalls sind zwischen der äusseren Kontur 9 der Profilierung 8 des Antriebselementes 7 und den Zahnsegmenten 5 Lagerelemente 10 vorgesehen, wie es insbesondere in den Figuren 1b und 1c angedeutet ist.

Als besonders vorteilhaft hat sich bei der vorliegenden Erfindung, insbesondere beim Koaxialgetriebe R₁, erwiesen, dass sich an das Zahnsegment 5 ein vergrössert ausgebildetes Auflageelement 11 anschliesst.

Wie insbesondere aus den Figuren 1a, 1b und 1c ersichtlich ist, verbindet ein Gelenk 12 gelenkartig das Zahnsegment 5 mit dem Auflageelement 11.

Ferner hat sich als vorteilhaft bei der vorliegenden Erfindung erwiesen, dass sich im jeweils stirnseitigen Bereich der Auflageelemente 11 benachbarte Auflageelemente 11 kettenartig oder gliederartig anschliessen lassen, wobei gleichzeitig ein Spiel in dargestellter Doppelpfeilrichtung x, d. h., bezogen auf die Bewegung der Umfangsfläche und ein Spiel in γ-Richtung, also in Radialrichtung, wie in Figur 1c dargestellt, möglich ist.

Dabei hat es sich als besonders vorteilhaft erwiesen, dass sich das Auflageelement 11 durch das Gelenk 12 der Kontur 9 der Profilierung 8 anpassen kann und dadurch geleichzeitig an die zwangsgeführte Position des in der Führung 4 eingesetzten Zahnsegmentes 5 gebunden ist.

Somit kann das Auflageelement 11 sich leicht gelenkartig beim Verdrehen bzw. rotativen Bewegen des Antriebselementes 7 gegenüber dem Hohlrad 1 und/oder dem Element 3 an die durch Rotation sich andernde Kontur 9 des Antriebselementes 7 anpassen.

Die Auflageelemente 11 liegen im vorliegenden Ausführungsbeispiel gemäss den Figuren 1a, 1b und 1c direkt den Lagerelementen 10 auf, die wiederum aussen an der Kontur 9 des Antriebselementes 7 abgestützt sind.

Bevorzugt werden als Lagerelemente 10 eine Mehrzahl von Wälzkörper, insbesondere Nadelrollen oder Kugeln, verwendet.

Betreffend die Funktionsweise des Koaxialgetriebes wird auf die Deutsche Patentanmeldung DE 10 2006 042 786 verwiesen. Dort ist die Funktionsweise exakt beschrieben.

Die vorliegende Anmeldung betrifft eine weitere Entwicklung und eine Verbesserung der Kinematik zwischen Antriebselement 7 und Element 3, insbesondere im Bereich der Lagerung der Zahnsegmente 5.

In Figur 1b ist perspektivisch ein Teil des Koaxialgetriebes R₁ dargestellt. Dort ist entnehmbar, wie die einzelnen Auflageelemente 11 nebeneinander stirnseitig über entsprechende Vorsprünge 13 und Ausnehmungen 14 ineinander greifen und, wie in Figur 1c dargestellt, in x- und γ-Richtung ein Spiel zulassen. Durch das Ineinandergreifen des Vorsprunges 13 des einen Auflageelementes 11 in die Ausnehmung 14 der benachbarten Auflageelemente 11 ist eine gute Führung und gleichzeitig eine Lagerung und ein Halt in Axialrichtung gewährleistet.

Wichtig bei der vorliegenden Erfindung ist jedoch auch, dass durch die vergrösserten Auflageelemente 11 diese über eine Mehrzahl von einzelnen Lagerelementen 10, insbesondere Nadellager, abgestützt und abgefangen werden, so dass sehr hohe radiale Kräfte über die Verzahnung 2 zum Betrieb des Koaxialgetriebes R₁ aufgenommen werden können.

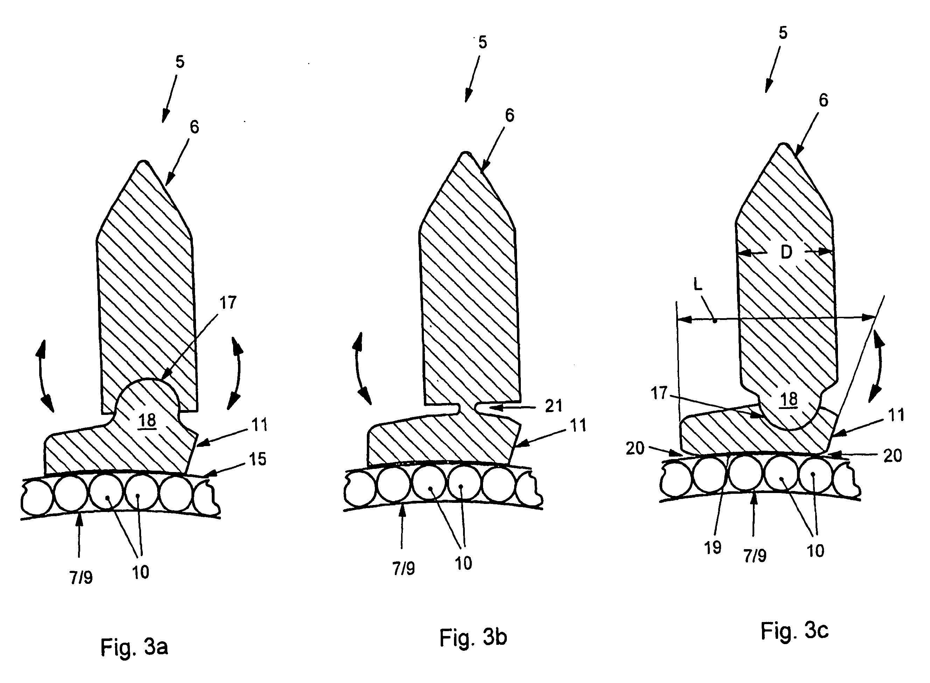

Bei der vorliegenden Erfindung hat sich ferner als vorteilhaft erwiesen, dass, wie hier nicht näher dargestellt und lediglich in Figur 3a angedeutet, zwischen dem Auflageelement 11 und dem Lagerelement 10 oder direkt zwischen Auflageelement 11 und einer Kontur 9 des Antriebselementes 7 ein Lageraussenring 15 (Fig. 3a) dazwischen eingesetzt sein kann. Der Lageraussenring 15 ist elastischer Art und unterstützt eine Kraftverteilung zwischen Auflageelement 11 und Lagerelement 10 bzw. eine Kraftverteilung zwischen den Auflageelementen 11 und der äusseren Kontur 9 des Antriebselementes 7.

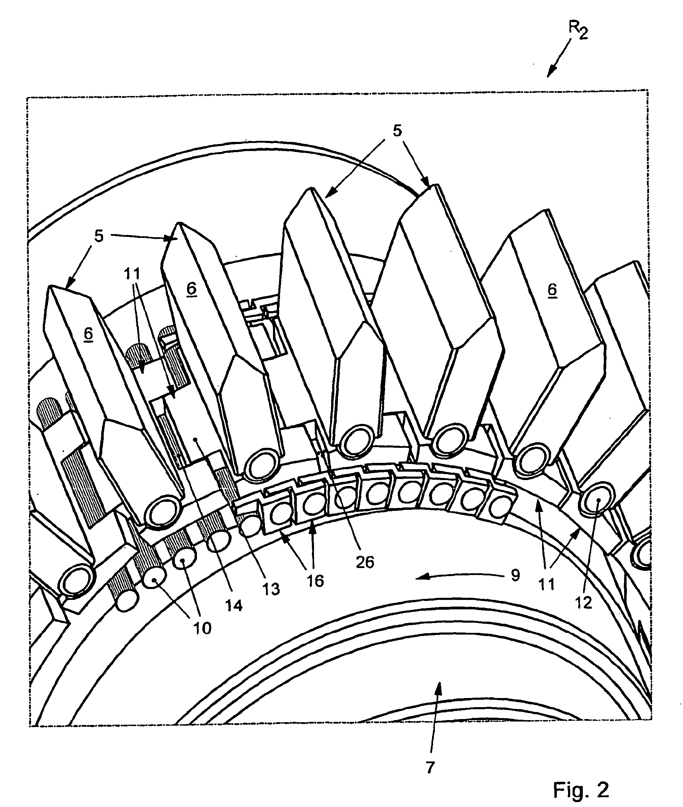

Im Ausführungsbeispiel der vorliegenden Erfindung gemäss Figur 2 ist ein Koaxialgetriebe R₂ aufgezeigt, bei welchem zwischen den Auflageelementen 11 und dem Antriebselement 7, insbesondere dessen Konturen 9, und zwischen einzelnen benachbarten Lagerelementen 10, insbesondere Nadelrollen, Abstandhalter 16 vorgesehen sind. Die Abstandhalter 16 greifen jeweils radial und stirnseitig an die Lagerelemente 10 vorzugsweise beidseitig an und beabstanden diese zueinander ketten- bzw. gliederartig.

Auf diese Weise können die einzelnen Nadelrollen zueinander radial um die Kontur 9 des Antriebselementes 7 beabstandet werden, wobei jeweils seitlich noch eine Führung der einzelnen Auflageelemente 11 gewährleistet wird.

In Figur 3a ist vergrössert ein Zahnsegment 5 mit einem Auflageelement 11 dargestellt, wobei in einer Ausnehmung 17 im Fussbereich des Zahnsegmentes 5 eine entsprechende Profilierung 18 des Auflageelementes 11 vorgesehen ist, so dass noch eine gelenkartige Bewegung der Auflageelemente 11 gegenüber dem Zahnsegment 5 gewährleistet wird.

Wie in Figur 3c dargestellt, kann auch daran gedacht sein, die entsprechende Profilierung 18 aus dem Fussbereich des Zahnsegmentes 5 zu bilden, die dann gelenkartig mit einer entsprechenden Ausnehmung 17 des Auflageelementes 11 zusammenwirkt.

Wird bspw. auf die Verwendung eines Lageraussenrings 15, wie er in Figur 3a dargestellt ist, verzichtet, hat es sich als vorteilhaft erwiesen, wenn die Auflageelemente 11 an ihrer zum Lagerelement 10 gerichteten Unterseite 19 insbesondere in den stirnseitigen Bereichen Einführungsfase 20 aufweisen.

Auf diese Weise lässt sich bspw. ohne zwischengelagerten Lageraussenring 15 die Last über die Lagerelemente 10 direkt auf das Auflageelement 11 und somit direkt auf das Zahnsegment 5 übertragen.

Ferner ist von Vorteil bei der vorliegenden Erfindung, dass stirnseitig die Auflageelemente 11 entsprechende Überlappungen 13, 14, beispielsweise als Vorsprung 13 oder Ausnehmung 14 oder auch als Rücksprung, aufweisen, um in Umfangsrichtung als segmentierter Lageraussenring eine Führung der Lagerungen 10 in Umfangsrichtung zu gewährleisten.

Zudem stellt sich ein definierter Spalt 26 zwischen zwei stirnseitig beabstandeten Auflageelementen 11 in Abhängigkeit der Kontur 9 bzw. Profilierung 8 des Antriebselementes 7 ein, um unterschiedliche Radien des Antriebselementes 7 bei einer Drehbewegung beim Zusammenwirken mit den Auflageelementen 11 auszugleichen.

Im Ausführungsbeispiel gemäss Figur 3b ist dargestellt, dass Auflageelement 11 und Zahnsegment 5 einstückig ausgebildet sind, wobei im Fussbereich des Zahnsegmentes 5 eine Einschnürung 21 als Verjüngung ausgebildet ist, um ein gelenkiges bzw. ein gelenkartiges Schwenken der Auflageelemente 11 gegenüber dem Zahnsegment 5, wie in Doppelpfeilrichtung angedeutet, zuzulassen.

Wichtig ist jedoch bei der vorliegenden Erfindung, wie es auch deutlich in den Figuren 3a bis 3c dargestellt ist, dass eine Länge L der Auflageelemente 11 grösser ist, als eine Dicke D des Zahnsegmentes 5.

Die Länge L der Auflageelemente 11 kann die 1,5 bis 4-fache Dicke D des Zahnsegmentes 5 betragen. Dies soll ebenfalls im Rahmen der vorliegenden Erfindung liegen.

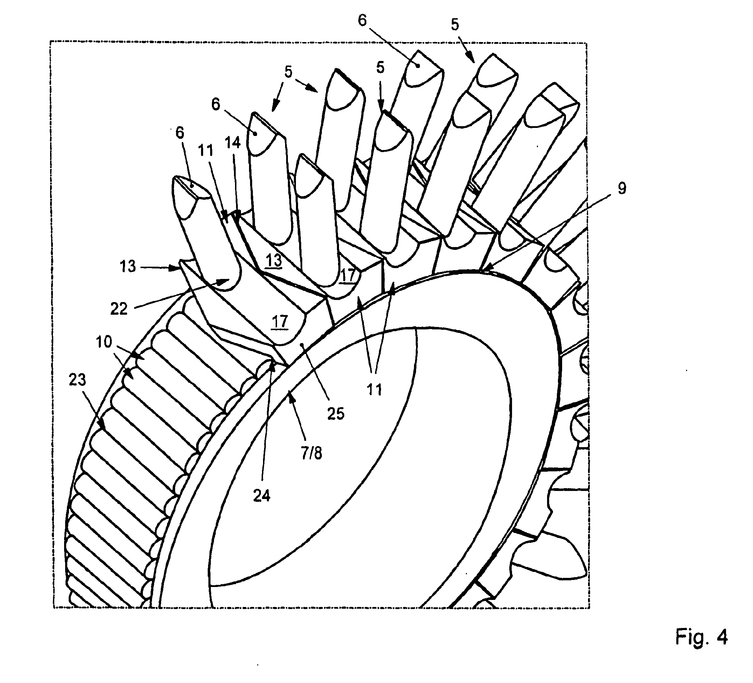

Ferner hat sich als besonders vorteilhaft bei der vorliegenden Erfindung erwiesen, wie insbesondere aus dem Ausführungsbeispiel gemäss Figur 4 ersichtlich ist, dass eine Mehrzahl von Auflageelementen 11 radial und nebeneinander beabstandet auf einer äusseren Kontur 9 des Antriebselementes 7 angeordnet sind. Dabei sind die Lagerelemente 10 in einer Lagernut 23 aussen in der Kontur 9 bzw. Profilierung 8 eingelassen, so dass diese axial weder in die eine noch in die andere Richtung austreten können.

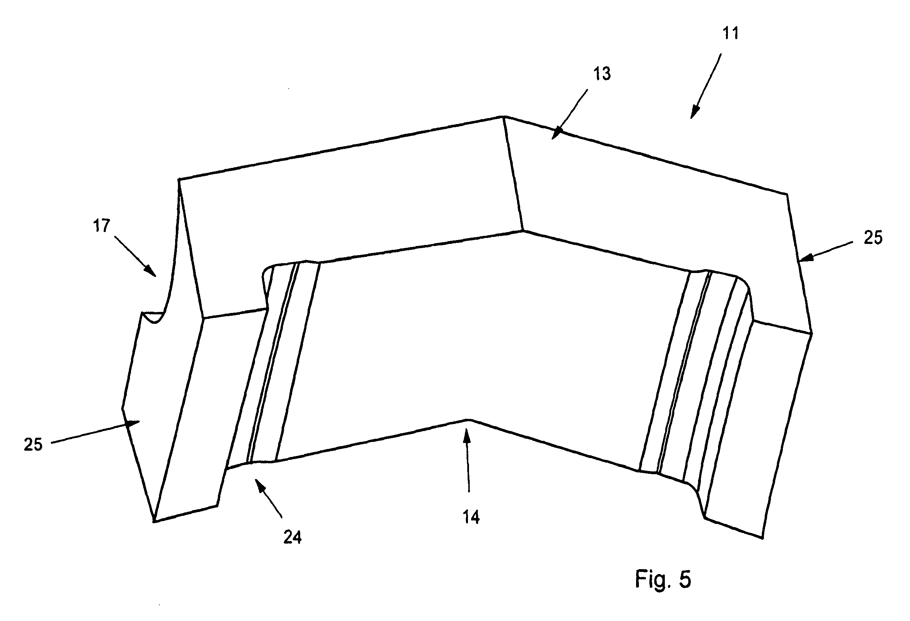

Auf die Lagerelemente 10 sind eine Mehrzahl von nebeneinander angeordneten Auflageelementen 11 aufgelegt, die ebenfalls an ihrer Unterseite entsprechende Lagernuten 24 besitzen, so dass stirnseitig entsprechende Flansche 25, wie in Figur 5 dargestellt, die Lagerelemente 10 übergreifen, so dass das Auflageelement 11 axial gesichert auf den Lagerelementen 10, insbesondere den Nadelrollen, gehalten ist und radial eine optimale Lagerung zulässt.

Seitlich besitzt das Auflageelement 11 einen Vorsprung 13, der vorzugsweise dreieckartig und als stumpfes Dreieck ausgeformt ist, und in eine entsprechende passende Ausnehmung 14 eines benachbarten Auflageelements 11 eingreift. Das Auflageelement 11 besitzt einerseits einen entsprechenden Vorsprung 13 und anderseits eine entsprechende Ausnehmung 14, die dem Eingreifen des Vorsprunges 13 des benachbarten Auflageelements 11 dient.

Ferner ist die entsprechende Ausnehmung 17 vorzugsweise durchgehend ausgebildet, so dass zumindest ein Zahnsegment 5 in seinem Fussbereich 22 dort eingreifen kann.

Bei der vorliegenden Erfindung hat sich als besonders vorteilhaft erwiesen, eine Mehrzahl von einzelnen Auflageelementen 11 mit Lagerelementen 10 segmentartig auszubilden, die als segmentartige Lageraussenringe das eigentliche Antriebselement 7, insbesondere dessen Profilierung 8, umfangen. Gleichzeitig dient das Auflageelement 11 der Verteilung der Kräfte auf die Zahnsegmente 5, wobei die Zahnsegmente 5 innerhalb der Auflageelemente 11 separat gelagert bzw. abgestützt sind. Ein derartig segmentierter Lageraussenring, gebildet aus einer Mehrzahl von segmentartigen Auflageelementen 11, ist sehr steif und kann sehr hohe Kräfte bei hohen Umfangsgeschwindigkeiten auf die einzelnen Zahnsegmente übertragen.

Es hat sich als vorteilhaft bei der vorliegenden Erfindung erwiesen, in Axialrichtung eine Mehrzahl, vorzugsweise zwei, nebeneinander angeordnete zylindrisch ausgebildete Zahnsegmente 5 in das Element 3, insbesondere in das Abtriebselement, in entsprechende, passende, zylindrische Führung 4 einzusetzen, die dann gemeinsam in einem Auflageelement 11 abgestützt sind.

Ausserdem wird begehrt, dass die einzelnen radial um das Antriebselement 7 angeordneten Lagerelemente 10 zueinander über entsprechende Abstandhalter, insbesondere Nadel- oder Kugellagerkäfige, elastisch oder segmentiert verbunden sind.

Ausserdem wird begehrt, dass die Lagerelemente 10 in einem Käfig vollrollig oder segmentiert aussen die Profilierung des Antriebselementes 7 umfangen.

Ausserdem wird begehrt, dass zwischen Antriebselement 7 und Auflageelement 11 ein zusätzlicher elastischer Lageraussenring angeordnet ist.

Ausserdem wird begehrt, dass der zusätzliche Lageraussenring zwischen den Lagerelementen 10 und dem Auflageelement 11 angeordnet ist.

Ausserdem wird begehrt, dass das Antriebselement 7, insbesondere die Profilierung, eine äussere umlaufende Lagernut aufweist, die dem axialen Führen der Lagerelemente 10 dient.

Ausserdem wird begehrt, dass das Auflageelement 11 seitlich einseitig oder beidseitig einen zumindest teilweise überlappenden Flansch aufweist, der zur axialen Führung die Lagerelemente 10 einseitig oder beidseitig übergreift.

Ausserdem wird begehrt, dass an einer Unterseite des Auflageelementes 11 seitlich im Bereich der Flansche Lagernuten 23, insbesondere Gleitflächen od. dgl. gebildet sind.

### Bezugszeichenliste

| | | | | | |
|---|---|---|---|---|---|
| 1 | Hohlrad | 34 | | 67 | |
| 2 | Verzahnung | 2' | Zahnlücke | 68 | |
| 3 | Element | 36 | | 69 | |
| 4 | Führung | 37 | | 70 | |
| 5 | Zahnsegment. | 38 | | 71 | |
| 6 | Zahnflanke | 39 | | 72 | |
| 7 | Antriebselement | 40 | | 73 | |
| 8 | Profilierung | 41 | | 74 | |
| 9 | Kontur | 42 | | 75 | |
| 10 | Lagerelemente | 93 | | 76 | |
| 11 | Auflageelement | 44 | | 77 | |
| 12 | Gelenk | 45 | | 78 | |
| 13 | Vorsprung | 46 | | 79 | |
| 14 | Ausnehmung | 47 | | | |
| 15 | Lageraussenring | 48 | | R₁ | Koaxialgetriebe |
| 16 | Abstandhalter | 49 | | R₂ | Koaxialgetriebe |
| 17 | Ausnehmung | 50 | | | |
| 18 | Profilierung | 51 | | | |
| 19 | Unterseite | 52 | | D | Dicke |
| 20 | Einführungsfasen | 53 | | L | Länge |
| 21 | Einschnürung | 54 | | | |
| 22 | Fussbereich | 55 | | | |
| 23 | Lagernut | 56 | | | |
| 24 | Lagernut | 57 | | | |
| 25 | Flansche | 58 | | M | Mittelachse |
| 26 | Spalt | 59 | | | |
| 27 | | 60 | | x | Richtung |
| 28 | | 61 | | y | Richtung |
| 29 | | 62 | | | |
| 30 | | 63 | | | |
| 31 | | 64 | | | |
| 32 | | 65 | | | |
| 33 | | 66 | | | |

## Patentansprüche

1. Koaxialgetriebe, insbesondere Hohlwellengetriebe für die industrielle Antriebstechnik mit hoher Leistungsdichte, mit einem Antriebselement (7), einem Element (3), welches innerhalb eines Hohlrades (1) eingesetzt ist und in welchem eine Mehrzahl von Zahnsegmenten (5) radial nebeneinander in entsprechenden Führungen (4) eingesetzt sind, und einem Abtriebselement, wobei eine Übersetzung sowie eine Übertragung eines Antriebsmomentes zwischen Antriebselement (7) und Abtriebselement über die Mehrzahl von radial bewegbaren Zahnsegmenten (5) erfolgt, wobei jedes Zahnsegment (5) im Wirkbereich gegenüber dem Antriebselement (7) ein Auflageelement (11) aufweist,
**dadurch gekenntzeichnet,**
dass das Auflageelement (11) gegenüber einem Grundkörper des jeweilige Zahnsegments bewegbar, insbesondere gelenkig, gelenkartig direkt oder indirekt, verschwenkbar verbunden oder abgestützt ist, und die Auflageelemente (11) zusammen eine segmentierte Lagerung ergeben.

2. Koaxialgetriebe, nach Anspruch 1, **dadurch gekennzeichnet, dass** eine Mehrzahl von radial benachbarten Auflageelementen (11) einen definierten und veränderbaren Spalt (26) zueinander bilden, um unterschiedliche Radien einer Profilierung (8) des Antriebselementes (7) vorzugsweise polygonförmig auszugleichen.

3. Koaxialgetriebe, nach Anspruch 1 oder 2, **dadurch gekennzeichnet, dass** ein Auflageelement (11) in Umfangsrichtung überlappend zumindest einen Vorsprung (13) aufweist, welcher in zumindest eine entsprechende passgenaue Ausnehmung (14) oder Rücksprung eines benachbarten Auflageelementes (11) in Umfangsrichtung eingreift.

4. Koaxialgetriebe nach wenigstens einem der Ansprüche 1 bis 3, **dadurch gekennzeichnet, dass** in Umfangsrichtung benachbarte Auflageelemente (11) Überlappungen (13, 14) aufweisen, um Lagerelemente (10), insbesondere Wälzkörper, in Umfangsrichtung zu führen,

5. Koaxialgetriebe nach wenigstens einem der Ansprüche 1 bis 4, **dadurch gekennzeichnet, dass** das Auflageelement (11) als Segmentteil ausgebildet ist.

6. Koaxialgetriebe nach Anspruch 4, **dadurch gekennzeichnet, dass** stirnseitig einzelne benachbarte Auflageelemente (11) mit benachbarten Auflageelementen (11) in Umfangsrichtung überlappen und somit eine radiale äussere Führung für die Lagerelemente (10) als Lageraussenring bilden.

7. Koaxialgetriebe nach wenigstens einem der Ansprüche 1 bis 6, **dadurch gekennzeichnet, dass** stirnseitig jedes einzelne Auflageelement (11) mit einem benachbarten Auflageelement (11) verbindbar ist.

8. Koaxialgetriebe nach Anspruch 7, **dadurch gekennzeichnet, dass** zwei benachbarte Auflageelemente (11) stirnseitig gliederartig miteinander verbindbar sind und ein Spiel in einer Umfangs- und/oder Radialrichtung zueinander zulassen.

9. Koaxialgetriebe nach wenigstens einem der Ansprüche 1 bis 8, **dadurch gekennzeichnet, dass** zwischen Zahnsegment (5) und Auflageelement (11) ein Verbindungselement, insbesondere Gelenk (12), vorgesehen ist.

10. Koaxialgetriebe nach Anspruch 9, **dadurch gekennzeichnet, dass** das Verbindungselement gelenkartig einen Fussbereich des Zahnsegmentes (5) mit dem Auflageelement (11) verbindet.

11. Koaxialgetriebe nach wenigstens einem der Ansprüche 1 bis 10, **dadurch gekennzeichnet, dass** die Zahnsegmente (5) gegenüber dem Antriebselement (7) über einzelne radial um das Antriebselement (7) angeordnete Lagerelemente (10), insbesondere Nadelrollen oder Kugeln geführt sind.

12. Koaxialgetriebe nach Anspruch 11, **dadurch gekennzeichnet, dass** eine Überlappung (13, 14) des Auflageelementes (11) stirnseitig als Vorsprung (13) oder Ausnehmung oder Rücksprung (14) oder dergleichen ausgebildet ist, um in Umfangsrichtung eine Führung der Lagerelemente (10) zu gewährleisten.

13. Koaxialgetriebe nach Anspruch 12, **dadurch gekennzeichnet, dass** der Vorsprung (13) und die Ausnehmung (14) zweier benachbarter Auflageelemente (11) über einen Spalt (26) zueinander beabstandet ineinandergreifen und eine permanente Führung und/oder Überdeckung der einzelnen Lagerelemente (10) gewährleisten.

14. Koaxialgetriebe nach Anspruch 11, **dadurch gekennzeichnet, dass** das Auflageelement (11) an seiner Unterseite (19) im stirnseitigen Bereich einseitig oder beidseitig eine Einführungsfase (20) zum Einführen der Lagerelemente (10) aufweist.

## Claims

1. Coaxial gearing, in particular hollow shaft gearing for industrial drive technology, with high power density, having a drive element (7), an element (3) which is inserted within an internal gear (1) and in which a plurality of toothed segments (5) are inserted radially next to one another in corresponding guides (4), and an output element, a step-up/down and a transmission of a drive torque occurring between the drive element (7) and output element via the plurality of radially movable toothed segments (5), each toothed segment (5) having a supporting element (11) in the range of action with respect to the drive element (7),
**characterised**
**in that** the supporting element (11) is connected or supported so as to be movable, in particular in an articulated, directly or indirectly joint-like, pivotable manner, with respect to a basic body of the respective toothed segment and the supporting elements (11) together result in a segmented mounting.

2. Coaxial gearing according to Claim 1, **characterised in that** a plurality of radially adjacent supporting elements (11) form a defined and variable gap (26) with respect to one another to compensate for different radii of a profiling (8) of the drive element (7), preferably polygonally.

3. Coaxial gearing according to Claim 1 or 2, **characterised in that** a supporting element (11) has, overlapping in the circumferential direction, at least one projection (13) which engages in at least one corresponding exact-fitting recess (14) or setback of an adjacent supporting element (11) in the circumferential direction.

4. Coaxial gearing according to at least one of Claims 1 to 3, **characterised in that** supporting elements (11) adjacent in the circumferential direction have overlaps (13, 14) to guide bearing elements (10), in particular rolling bodies, in the circumferential direction.

5. Coaxial gearing according to at least one of Claims 1 to 4, **characterised in that** the supporting element (11) is designed as a segment part.

6. Coaxial gearing according to Claim 4, **characterised in that** individual adjacent supporting elements (11) overlap at the end faces with adjacent supporting elements (11) in the circumferential direction and thus form a radial outer guide for the bearing elements (10) as a bearing outer ring.

7. Coaxial gearing according to at least one of Claims 1 to 6, **characterised in that** each individual supporting element (11) is connectable at the end face to an adjacent supporting element (11).

8. Coaxial gearing according to Claim 7, **characterised in that** two adjacent supporting elements (11) are connectable to one another at the end faces in a link-like manner and allow play with respect to one another in a circumferential and/or radial direction.

9. Coaxial gearing according to at least one of Claims 1 to 8, **characterised in that** a connecting element, in particular a joint (12), is provided between the toothed segment (5) and supporting element (11).

10. Coaxial gearing according to Claim 9, **characterised in that** the connecting element connects a root region of the toothed segment (5) to the supporting element (11) in a joint-like manner.

11. Coaxial gearing according to at least one of Claims 1 to 10, **characterised in that** the toothed segments (5) are guided with respect to the drive element (7) via individual bearing elements (10), in particular needle rollers or balls, which are arranged radially around the drive element (7).

12. Coaxial gearing according to Claim 11, **characterised in that** an overlap (13, 14) of the supporting element (11) at the end faces is designed as a projection (13) or recess or setback (14) or the like to ensure a guidance of the bearing elements (10) in the circumferential direction.

13. Coaxial gearing according to Claim 12, **characterised in that** the projection (13) and the recess (14) of two adjacent supporting elements (11) engage one in the other, spaced apart from one another via a gap (26), and ensure a permanent guidance and/or covering of the individual bearing elements (10).

14. Coaxial gearing according to Claim 11, **characterised in that** the supporting element (11) has, on its underside (19) in the end-face region on one side or both sides, an introduction chamfer (20) for the introduction of the bearing elements (10).

## Revendications

1. Transmission coaxiale, en particulier transmission à arbre creux, destinée à l'entraînement industriel à haute densité de puissance, avec un élément d'entraînement (7), un élément (3) placé dans une roue creuse (1) et dans lequel une pluralité de segments dentés (5) sont placés radialement l'un à côté de l'autre dans des guides (4) correspondants, et un élément de sortie, une multiplication ainsi qu'une transmission d'un couple d'entraînement entre l'élément d'entraînement (7) et l'élément de sortie ayant lieu par l'intermédiaire de la pluralité de segments dentés (5) déplaçables radialement, chaque segment denté (5) présentant, dans la zone active face à l'élément d'entraînement (7), un élément d'appui (11),
**caractérisée par le fait**
**que** l'élément d'appui (11) est déplaçable par rapport à un corps de base du segment denté respectif, en particulier relié ou appuyé de manière articulée, directement ou indirectement à la manière d'une articulation, de manière pivotable, et que les éléments d'appui (11) constituent ensemble un montage segmenté.

2. Transmission coaxiale selon la revendication 1, **caractérisée par le fait qu'**une pluralité d'éléments d'appui (11) radialement adjacents forment entre eux un interstice défini et modifiable (26), pour compenser, de préférence de forme polygonale, des rayons différents d'un profilage (8) de l'élément d'entraînement (7).

3. Transmission coaxiale selon la revendication 1 ou 2, **caractérisée par le fait qu'**un élément d'appui (11) présente, en recouvrement dans le sens périphérique, au moins une saillie (13) qui s'engage dans au moins un évidement (14) ou décrochement en liaison de forme correspondant dans au moins un élément d'appui (11) adjacent dans le sens périphérique.

4. Transmission coaxiale selon au moins l'une des revendications 1 à 3, **caractérisée par le fait que** des éléments d'appui (11) adjacents dans le sens périphérique présentent des recouvrements (13, 14), pour guider des éléments de palier (10), en particulier des rouleaux, dans le sens périphérique.

5. Transmission coaxiale selon au moins l'une des revendications 1 à 4, **caractérisée par le fait que** l'élément d'appui (11) se présente sous forme de portion de segment.

6. Transmission coaxiale selon la revendication 4, **caractérisée par le fait que**, du côté frontal, des éléments d'appui (11) adjacents individuels se recouvrent dans le sens périphérique avec des éléments d'appui (11) adjacents et constituent donc un guide extérieur radial pour les éléments de palier (10) sous forme de bague extérieure de palier.

7. Transmission coaxiale selon au moins l'une des revendications 1 à 6, **caractérisée par le fait que**, du côté frontal, chaque élément d'appui (11) individuel peut être connecté à un élément d'appui (11) adjacent.

8. Transmission coaxiale selon la revendication 1, **caractérisée par le fait que** deux éléments d'appui (11) adjacents peuvent être connectés l'un à l'autre du côté frontal en forme de maillons et admettent un jeu l'un par rapport à l'autre dans un sens périphérique et/ou radial.

9. Transmission coaxiale selon au moins l'une des revendications 1 à 8, **caractérisée par le fait qu'**entre le segment denté (5) et l'élément d'appui (11) est prévu un élément de connexion, en particulier une articulation (12).

10. Transmission coaxiale selon la revendication 9, **caractérisée par le fait que** l'élément de connexion connecte à la manière d'une articulation une zone de pied du segment denté (5) à l'élément d'appui (11).

11. Transmission coaxiale selon au moins l'une des revendications 1 à 10, **caractérisée par le fait que** les segments dentés (5) sont guidés par rapport à l'élément d'entraînement (7) par l'intermédiaire d'éléments de palier (10) individuels disposés radialement autour de l'élément d'entraînement (7), en particulier des rouleaux à aiguilles ou des sphères.

12. Transmission coaxiale selon la revendication 11, **caractérisée par le fait qu'**un recouvrement (13, 14) de l'élément d'appui (11) se présente, du côté frontal, sous forme de saillie (13) ou d'évidement ou décrochement (14) ou autre, pour garantir, dans le sens périphérique, un guidage des éléments de palier (10).

13. Transmission coaxiale selon la revendication 12, **caractérisée par le fait que** la saillie (13) et l'évidement (14) de deux éléments d'appui (11) adjacents s'engagent l'un dans l'autre à une distance entre eux par l'intermédiaire d'un interstice (26) et garantissent un guidage permanent et/ou recouvrement des différents éléments de palier (10).

14. Transmission coaxiale selon la revendication 11, **caractérisée par le fait que** l'élément d'appui (11) présente, sur sa face inférieure (19), dans la zone du côté frontal d'un côté ou des deux côtés, un biseau d'introduction (20) pour l'introduction des éléments de palier (10).
